# EUROPEAN PATENT APPLICATION

(11) **EP 4 700 576 A1**
(43) Date of publication of application: **25.02.2026**
(21) Application number: 25191979.1
(22) Date of filing: 25.07.2025
(51) Int. Cl.: G06F 9/50, H04L 67/1008

(54) **METHOD AND APPARATUS FOR FLEXIBLE EXPANSION OF SERVERLESS ARCHITECTURE-BASED CLOUD SERVICE, AND STORAGE MEDIUM**

(30) Priority: 21.08.2024 CN 202411155429
(71) Applicant: Beijing Volcano Engine Technology Co., Ltd., Beijing 100190 (CN)
(72) Inventor: LI, Yikun, Beijing, 100028 (CN); WANG, Cong, Beijing, 100028 (CN); XU, Wenjie, Beijing, 100028 (CN); CHEN, Hui, Beijing, 100028 (CN)
(74) Representative: Marks & Clerk LLP

(57) **Abstract**

Embodiments of the present disclosure provide a method for flexible expansion of a serverless architecture-based cloud service, an apparatus, and a storage medium. A first indicator in a process of sending service traffic from an upstream container instance to a target downstream container instance and/or a second indicator in a process of processing the service traffic by the target downstream container instance are detected (5201) in a process of a container instance processing flow in a serverless architecture-based cloud platform, and whether the first indicator and/or the second indicator exceed a corresponding preset threshold is determined; and if so, a part of the service traffic is forwarded (S202) to a pre-created and warmed-up new container instance corresponding to the target downstream container instance.

## Description

### FIELD

Embodiments of the present disclosure relate to the technical field of computer and network communication, and in particular, to a method and apparatus for flexible expansion of a serverless architecture-based cloud service, and a storage medium.

### BACKGROUND

A serverless architecture is an architecture without a server, which is an architecture mode of cloud computing. In the serverless architecture, developers no longer need to pay attention to server management at a bottom layer, but focus on code writing and service logic. The serverless architecture has become an important technology in modern cloud computing in terms of processing burst traffic.

Some existing cloud platforms with the serverless architecture usually have an auto-scaling function to cope with burst traffic, and increase or decrease container instances according to traffic, so as to ensure that applications deployed on the cloud platforms can maintain high availability and performance when facing the burst traffic.

However, expansion capability of the existing cloud platforms with the serverless architecture depends on a centralized gateway, while operation and maintenance of the centralized gateway increase resource overhead and persistent performance loss; users need to finely configure expansion policies, which is relatively complicated in configuration; for unpredictable burst traffic, the error rate is relatively high, and timely expansion cannot be achieved, affecting the response to the traffic.

### SUMMARY

Embodiments of the present disclosure provide a method and apparatus for flexible expansion of a serverless architecture-based cloud service, and a storage medium, so as to realize rapid expansion of a target downstream container instance in a serverless architecture-based cloud platform, thereby reducing an error rate and improving responsiveness.

In a first aspect, an embodiment of the present disclosure provides a method for flexible expansion of a serverless architecture-based cloud service, including:
detecting, in a process of a container instance processing flow in a serverless architecture-based cloud platform, a first indicator in a process of sending service traffic from an upstream container instance to a target downstream container instance, and/or a second indicator in a process of processing the service traffic by the target downstream container instance, and determining whether a target indicator exceeds a corresponding preset threshold, wherein the target indicator includes the first indicator and/or the second indicator; and
if it is determined that the target indicator exceeds the corresponding preset threshold, forwarding a part of the service traffic to a new container instance corresponding to the target downstream container instance, wherein the new container instance is a container instance that is newly created in advance for the target downstream container instance and has been warmed up.

In a second aspect, an embodiment of the present disclosure provides an apparatus for flexible expansion of a serverless architecture-based cloud service, including:
a detecting unit, configured to detect, in a process of a container instance processing flow in a serverless architecture-based cloud platform, a first indicator in a process of sending service traffic from an upstream container instance to a target downstream container instance, and/or a second indicator in a process of processing the service traffic by the target downstream container instance, and determine whether a target indicator exceeds a corresponding preset threshold, wherein the target indicator includes the first indicator and/or the second indicator; and
a forwarding unit, configured to, if it is determined that the target indicator exceeds the corresponding preset threshold, forward a part of the service traffic to a new container instance corresponding to the target downstream container instance, wherein the new container instance is a container instance that is newly created in advance for the target downstream container instance and has been warmed up.

In a third aspect, an embodiment of the present disclosure provides an electronic device, including: at least one processor and a memory;
the memory stores computer-executable instructions; and
the at least one processor executes the computer-executable instructions stored in the memory, causing the at least one processor to execute the method for flexible expansion of a serverless architecture-based cloud service according to the first aspect and various possible designs of the first aspect.

In a fourth aspect, an embodiment of the present disclosure provides a computer-readable storage medium storing computer-executable instructions which, when executed by a processor, cause the method for flexible expansion of a serverless architecture-based cloud service according to the first aspect and various possible designs of the first aspect to be implemented.

In a fifth aspect, an embodiment of the present disclosure provides a computer program product including computer-executable instructions which, when executed by a processor, cause the method for flexible expansion of a serverless architecture-based cloud service according to the first aspect and various possible designs of the first aspect to be implemented.

According to the method and apparatus for flexible expansion of a serverless architecture-based cloud service, and the storage medium provided by the embodiments of the present disclosure, in the process of the container instance processing flow in the serverless architecture-based cloud platform, the first indicator in the process of sending the service traffic from the upstream container instance to the target downstream container instance and/or the second indicator in the process of processing the service traffic by the target downstream container instance are detected, and whether the target indicator exceeds the corresponding preset threshold is determined, wherein the target indicator includes the first indicator and/or the second indicator; and if it is determined that the target indicator exceeds the corresponding preset threshold, a part of the service traffic is forwarded to the new container instance corresponding to the target downstream container instance, wherein the new container instance is the container instance that is newly created in advance for the target downstream container instance and has been warmed up. In the embodiments of the present disclosure, in the serverless architecture, the target indicators of the target downstream container instance and/or the target indicator of the upstream container instance are detected to control the forwarding of the service traffic sent by the upstream container instance to the new container instance of the target downstream container instance to carry the service traffic, and the new container instance has been warmed up in advance, so that expansion can be realized with almost zero delay, thereby avoiding the delay caused by creating the new container instance after the expansion is triggered and cold starting the new container instance, which affects the response to the service traffic, and avoiding the overload of the target downstream container instance, thereby avoiding the increase of the error rate caused by overload protection, and improving the performance of the serverless architecture in processing high concurrency scenarios, without relying on the centralized gateway to avoid the resource overhead and performance loss caused by the operation and maintenance of the centralized gateway.

### BRIEF DESCRIPTION OF THE DRAWINGS

In order to illustrate the technical solutions in the embodiments of the present disclosure or in the prior art more clearly, the following will briefly introduce the drawings required for describing the embodiments or the prior art. Obviously, the drawings in the following description are some embodiments of the present disclosure, and other drawings may be obtained by those of ordinary skill in the art according to these drawings without creative efforts.
FIG. 1 is a schematic diagram of a scenario of a method for flexible expansion of a serverless architecture-based cloud service according to an embodiment of the present disclosure;
FIG. 2 is a schematic flowchart of a method for flexible expansion of a serverless architecture-based cloud service according to an embodiment of the present disclosure;
FIG. 3 is a schematic diagram of downstream forwarding in a method for flexible expansion of a serverless architecture-based cloud service according to an embodiment of the present disclosure;
FIG. 4 is a schematic diagram of upstream forwarding in a method for flexible expansion of a serverless architecture-based cloud service according to an embodiment of the present disclosure;
FIG. 5 is a block diagram of an apparatus for flexible expansion of a serverless architecture-based cloud service according to an embodiment of the present disclosure; and
FIG. 6 is a schematic diagram of a hardware structure of an electronic device according to an embodiment of the present disclosure.

### DETAILED DESCRIPTION OF EMBODIMENTS

In order to make the objectives, technical solutions, and advantages of the embodiments of the present disclosure clearer, the technical solutions in the embodiments of the present disclosure will be described clearly and comprehensively below with reference to the drawings in the embodiments of the present disclosure. Obviously, the described embodiments are part of the embodiments of the present disclosure, but not all of them. Based on the embodiments in the present disclosure, all other embodiments obtained by those of ordinary skill in the art without creative efforts shall fall within the protection scope of the present disclosure.

Some existing cloud platforms based on the serverless architecture usually have the auto-scaling function to cope with burst traffic, and increase or decrease container instances according to traffic, so as to ensure that applications deployed on the cloud platforms can maintain high availability and performance when facing the burst traffic.

For example, in a cloud platform with a server architecture, the number of execution environments is automatically scaled to cope with increased requests, until a concurrency limit value of an account is reached. In order to prevent excessive expansion due to burst traffic, there is a limit value to the speed of expansion. In addition, options of reserved concurrency and configured concurrency are also provided, allowing a certain number of execution environments to be reserved or pre-initialized for key functions, thereby reducing cold start delay and improving response speed.

In another cloud platform with a server architecture, an auto-scaling function is also provided without manual intervention to ensure that an application can handle any amount of traffic. Moreover, charges are only made when functions are executed, so no fees will be paid for idle resources. In addition, when processing requests, functions can be automatically replicated to multiple availability zones to ensure that the application is still available even if a certain zone fails.

In another cloud platform with a server architecture, a container technology is used to provide the ability to automatically increase or decrease container instances according to traffic in a serverless environment, and traffic changes can be responded to within several milliseconds, thereby achieving efficient use of resources, and charges are only made when the containers process requests.

However, expansion capability of the existing cloud platforms based on the serverless architecture depends on the centralized gateway, while operation and maintenance of the centralized gateway (especially in a microservice scenario) increase resource overhead and persistent performance loss; auto-scaling can provide necessary computing resources to cope with predictable burst traffic, but may lead to unpredictable cost growth, so users usually need to finely configure expansion policies to optimize cost-benefit ratio, but the configuration is relatively complicated, which brings difficulties to users; for unpredictable burst traffic, the error rate is relatively high, and timely expansion cannot be achieved, and most of the expansion is completed asynchronously, which cannot solve the problem of instantaneous traffic, affecting the response to the traffic.

In order to solve at least one of the above technical problems, embodiments of the present disclosure provide a method for flexible expansion of a serverless architecture-based cloud service. The first indicator in the process of sending the service traffic from the upstream container instance to the target downstream container instance and/or the second indicator in the process of processing the service traffic by the target downstream container instance are detected in the process of the container instance processing flow in the serverless architecture-based cloud platform, and whether the target indicator exceeds the corresponding preset threshold is determined, wherein the target indicator includes the first indicator and/or the second indicator; and if it is determined that the target indicator exceeds the corresponding preset threshold, a part of the service traffic is forwarded to the new container instance corresponding to the target downstream container instance, wherein the new container instance is the container instance that is newly created in advance for the target downstream container instance and has been warmed up. In the embodiments of the present disclosure, in the serverless architecture, the target indicators of the target downstream container instance and/or the target indicator of the upstream container instance are detected to control the forwarding of the service traffic sent by the upstream container instance to the new container instance of the target downstream container instance to carry the service traffic, and the new container instance has been warmed up in advance, so that expansion can be realized with almost zero delay, thereby improving the response to the service traffic, avoiding the delay caused by creating the new container instance after the expansion is triggered and cold starting the new container instance, and avoiding the overload of the target downstream container instance, thereby avoiding the increase of the error rate caused by overload protection, and improving the performance of the serverless architecture in processing high concurrency scenarios, without relying on the centralized gateway to avoid the resource overhead and performance loss caused by the operation and maintenance of the centralized gateway.

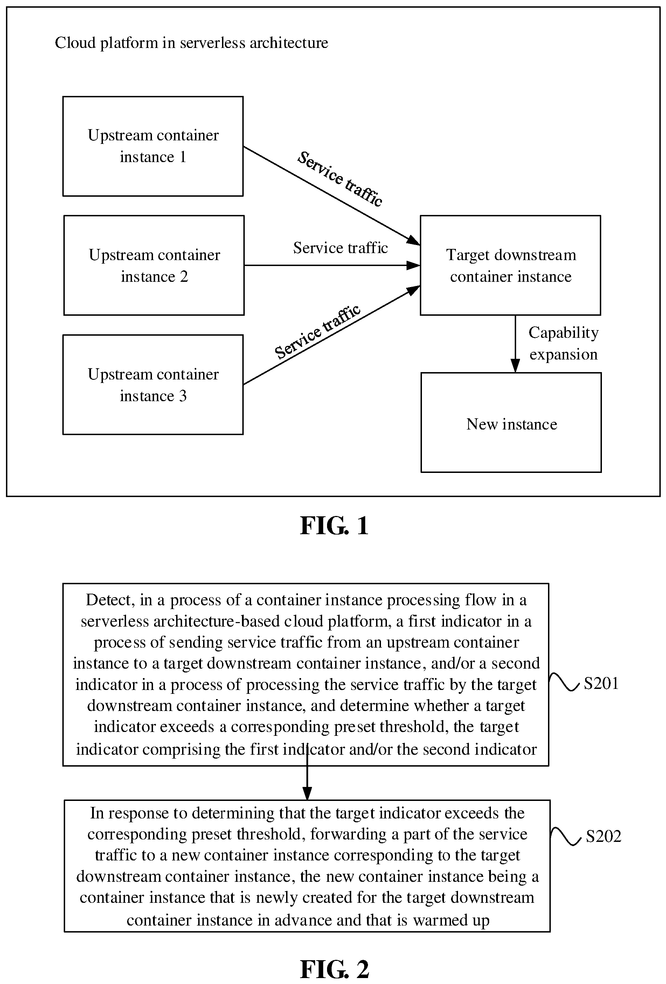

The method for flexible expansion of a serverless architecture-based cloud service provided by the embodiments of the present disclosure can be applied to a serverless architecture-based cloud platform as shown in FIG. 1, which includes a target downstream container instance and one or more upstream container instances that send service traffic to the target downstream container instance. When it is detected that the target indicator of the target downstream container instance and/or the target indicator of the one or more upstream container instances exceed a preset threshold, a part of the service traffic is forwarded to a new container instance corresponding to the target downstream container instance to realize expansion, wherein the new container instance is a container instance that is newly created in advance for the target downstream container instance and has been warmed up.

It should be noted that user information (including but not limited to user device information, user personal information, etc.) and data (including but not limited to data for analysis, stored data, displayed data, etc.) involved in the present disclosure are information and data authorized by users or fully authorized by parties, and the collection, use, and processing of related data need to comply with relevant laws, regulations, and standards of relevant countries and regions, and corresponding operation entry is provided for users to choose authorization or rejection.

The method for flexible expansion of a serverless architecture-based cloud service of the present disclosure will be described in detail below with reference to specific embodiments.

Referring to FIG. 2, FIG. 2 is a schematic flowchart of a method for flexible expansion of a serverless architecture-based cloud service according to an embodiment of the present disclosure. The method of this embodiment can be applied to a terminal device or a server. The method for flexible expansion of a serverless architecture-based cloud service includes the following.

At S201, in a process of a container instance processing flow in a cloud platform with a serverless architecture, a first indicator in a process of sending service traffic from an upstream container instance to a target downstream container instance and/or a second indicator in a process of processing the service traffic by the target downstream container instance are detected, and whether a target indicator exceeds a corresponding preset threshold is determined, wherein the target indicator includes the first indicator and/or the second indicator.

In this embodiment, in the serverless architecture-based cloud platform, the upstream container instance (Pod) may send the service traffic to the downstream container instance, such as a service request, an invocation request, file or data transmission, etc., and any target downstream container instance may process the service traffic after receiving the service traffic sent by one or more upstream container instances. However, the target downstream container instance has limited computing resources and can process limited service traffic. When there is burst service traffic in the upstream container instance, the service traffic received by the target downstream container instance may exceed its processing capability, so the target downstream container instance needs to be expanded.

In order to accurately determine the timing of expanding the target downstream container instance, in this embodiment, whether the target indicator of the target downstream container instance and/or the target indicator of the one or more upstream container instances exceed the corresponding preset threshold may be detected in the process of the target downstream container instance receiving the service traffic sent by the one or more upstream container instances. The target indicator may be different for the upstream container instance and the target downstream container instance, and the target indicator includes the first indicator in a process of forwarding the service traffic from the upstream container instance to the target downstream container instance, and/or the second indicator in a process of processing the service traffic by the target downstream container instance.

Optionally, for the target downstream container instance, the target indicator, that is, the second indicator, may be a target performance indicator of the target downstream container instance, including but not limited to one or more of performance indicators such as CPU utilization, memory utilization, or request delay time, etc. Each target performance indicator may be configured with a corresponding preset threshold in advance, and when at least one of the one or more target performance indicators of the target downstream container instance exceeds the corresponding preset threshold, the expansion of the target downstream container instance is triggered, which can avoid the overload of the target downstream container instance affecting the performance, especially avoid the triggering of overload protection by the target downstream container instance, thereby avoiding the increase of the error rate caused by the target downstream container instance refusing the service traffic that cannot be processed due to the triggering of the overload protection.

Optionally, for the target downstream container instance, the second indicator may also be a data volume of the service traffic received by the target downstream container instance, and a preset traffic threshold corresponding to the service traffic received by the target downstream container instance is configured. When the service traffic received by the target downstream container instance exceeds the corresponding preset traffic threshold, the expansion of the target downstream container instance is triggered.

Optionally, for the upstream container instance, the target indicator, that is, the first indicator, may be a data volume of the service traffic sent by any target upstream container instance to the target downstream container instance, and the preset traffic threshold corresponding to the data volume of the service traffic sent by any target upstream container instance to the target downstream container instance is configured, and when the service traffic sent by any target upstream container instance to the target downstream container instance exceeds the corresponding preset traffic threshold, the expansion of the target downstream container instance is triggered.

Optionally, the above target indicators may be combined with each other. In addition, the target indicator is not limited to the above examples, and may also be other indicators, which will not be enumerated here.

At S202, if it is determined that the target indicator exceeds the corresponding preset threshold, a part of the service traffic is forwarded to a new container instance corresponding to the target downstream container instance, wherein the new container instance is a container instance that is newly created in advance for the target downstream container instance and has been warmed up.

In this embodiment, when it is determined that the first indicator and/or the second indicator exceed the corresponding preset threshold, the expansion of the target downstream container instance is triggered, and a part of the service traffic may be forwarded to the new container instance corresponding to the target downstream container instance, wherein the new container instance may be a container instance that is newly created in advance for the target downstream container instance and has been warmed up, that is, the new container instance may directly start running when the expansion is triggered, or it only takes a short time to start running without going through time-consuming processes such as creation and startup. In this way, the expansion can be realized with almost zero delay when it is determined that the target indicator exceeds the corresponding preset threshold, thereby avoiding the delay caused by creating the new container instance after the expansion is triggered and cold starting the new container instance, which affects the response to the service traffic.

The new container instance corresponding to the target downstream container instance may be a new container instance that is newly created in advance for the target downstream container instance and has been warmed up before the target indicator exceeds the corresponding preset threshold, wherein the warm-up process is to load the service in the target downstream container instance (or the image of the target downstream container instance) into the new container instance in advance and complete the cold start in advance, which may be any start-up mode such as complete cold start or quick cold start in advance, as long as the warm-up is completed before the target indicator exceeds the corresponding preset threshold, and of course, the warm-up may also be completed within a preset time (a very short time) after the preset threshold is exceeded. Optionally, the new container instance that is newly created in advance for the target downstream container instance and has been warmed up may be created at any moment (for example, reaching a preset proportion of the preset threshold) before the target indicator is about to reach the corresponding preset threshold. In addition, there may be more than one new container instance corresponding to the target downstream container instance.

Optionally, the new container instance that is newly created in advance for the target downstream container instance and has been warmed up may not be activated before the target indicator exceeds the corresponding preset threshold. In the case of no activation, no fees will be charged, and the resources are only pre-allocated without actual use. After the target indicator exceeds the corresponding preset threshold, the new container instance is activated, and at this time, the new container instance can operate functionally. After a part of the service traffic is forwarded to the new container instance, the part of the service traffic may be processed by the new container instance.

Optionally, forwarding a part of the service traffic to the new container instance corresponding to the target downstream container instance, regardless of how much service traffic is forwarded and which service traffic is forwarded can be implemented in any feasible manner, as long as it is ensured that the target indicator of the target downstream container instance and/or the target indicator of the upstream container instance no longer exceed the preset threshold.

According to the method for flexible expansion of a serverless architecture-based cloud service provided by this embodiment, in the process of the container instance processing flow in the serverless architecture-based cloud platform, the first indicator in the process of sending the service traffic from the upstream container instance to the target downstream container instance and/or the second indicator in the process of processing the service traffic by the target downstream container instance are detected, and whether the target indicator exceeds the corresponding preset threshold is determined, wherein the target indicator includes the first indicator and/or the second indicator; and if it is determined that the target indicator exceeds the corresponding preset threshold, a part of the service traffic is forwarded to the new container instance corresponding to the target downstream container instance, wherein the new container instance is the container instance that is newly created in advance for the target downstream container instance and has been warmed up. In the embodiments of the present disclosure, in the serverless architecture, the target indicator of the target downstream container instance and/or the target indicator of the upstream container instance are detected to control the forwarding of the service traffic sent by the upstream container instance to the new container instance of the target downstream container instance to carry the service traffic, and the new container instance has been warmed up in advance, so that expansion can be realized with almost zero delay, thereby avoiding the delay caused by creating the new container instance after the expansion is triggered and cold starting the new container instance, which affects the response to the service traffic, and avoiding the overload of the target downstream container instance, thereby avoiding the increase of the error rate caused by overload protection, and improving the performance of the serverless architecture in processing high concurrency scenarios, without relying on the centralized gateway to avoid the resource overhead and performance loss caused by the operation and maintenance of the centralized gateway.

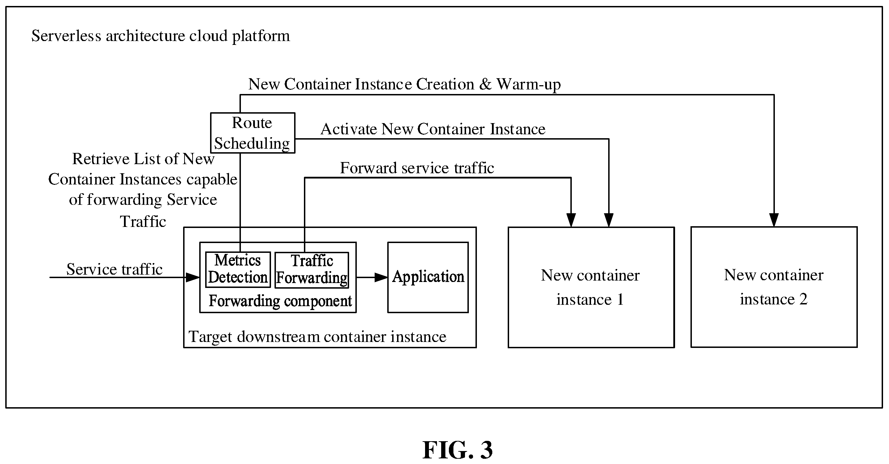

In an optional embodiment, on the basis of any of the above embodiments, as shown in FIG. 3, a forwarding component may be preset in the target downstream container instance, and the forwarding component can detect a target performance indicator (i.e., the second indicator) of the target downstream container instance in real time, including but not limited to one or more of performance indicators such as CPU utilization, memory utilization, or request delay time, etc. If it is detected that at least one of the target performance indicators of the target downstream container instance exceeds a corresponding preset threshold, the forwarding component may forward a part of the service traffic received by the target downstream container instance from the one or more upstream container instances to the new container instance corresponding to the target downstream container instance. By presetting the forwarding component to detect the target performance indicator and forward the service traffic, the triggering of overload protection by the target downstream container instance can be avoided, thereby avoiding an increase of the error rate caused by the target downstream container instance refusing the service traffic that cannot be processed due to the triggering of the overload protection; in addition, the end-to-end time of upstream service discovery can also be reduced, that is, the upstream service is prevented from discovering the route of the new container instance corresponding to the target downstream container instance through FaaS (Function as a Service), thereby reducing the end-to-end time; in addition, since the service traffic is forwarded when the target performance indicator of the target downstream container instance exceeds the corresponding preset threshold, the target downstream container instance can run at a certain resource utilization, thereby preventing the target performance indicator of the target downstream container instance from surging to trigger the overload protection.

Optionally, if a plurality of new container instances are created in advance for the target downstream container instance, when the forwarding component detects that at least one of the target performance indicators of the target downstream container instance exceeds the corresponding preset threshold, a list of new container instances capable of forwarding the service traffic may be obtained from the plurality of new container instances, and a part of the service traffic is forwarded to one or more of the new container instances in the list of new container instances capable of forwarding the service traffic.

Optionally, the target performance indicator may also be detected for the new container instance corresponding to the target downstream container instance, and if the target performance indicator of the new container instance reaches a corresponding threshold, a part of the service traffic received by the target downstream container instance from the one or more upstream container instances may continue to be forwarded to another new container instance corresponding to the target downstream container instance. The another new container instance is also created and warmed up before the target performance indicator of the former new container instance reaches the corresponding threshold, for example, a next new container instance may be created after the former new container instance is activated, or the next new container instance is created when the target performance indicator of the former new container instance reaches a preset proportion of the preset threshold. Optionally, the detection of the target performance indicator of the former new container instance may be detected by a forwarding component preset on the former new container instance and sent to the forwarding component of the target downstream container instance, and when it is determined that the target performance indicator of the former new container instance reaches the corresponding threshold, the forwarding of the service traffic to the next new container instance is controlled by the forwarding component of the target downstream container instance, and so on, that is, the forwarding of the service traffic is uniformly controlled by the forwarding component of the target downstream container instance. Alternatively, the detection of the target performance indicator of the former new container instance may be detected by a forwarding component preset on the former new container instance, and when it is determined that the target performance indicator of the former new container instance reaches the corresponding threshold, a part of the service traffic received from the target downstream container instance is forwarded to the next new container instance by the forwarding component of the former new container instance, and so on, that is, the forwarding of the service traffic to the next new container instance is controlled by the forwarding component of the former new container instance.

Optionally, in any of the above embodiments, when creating the corresponding new container instance for the target downstream container instance, or when forwarding a part of the service traffic to the new container instance corresponding to the target downstream container instance, whether there is the corresponding new container instance for the target downstream container instance may be searched, and if not, the corresponding new container instance is created for the target downstream container instance, and warmed up or started.

In addition, after a part of the service traffic is forwarded to the new container instance corresponding to the target downstream container instance, if the target performance indicator of the target downstream container instance does not exceeds the preset threshold any more, the new container instance may be stopped, and all the service traffic is sent to the target downstream container instance for processing. Optionally, the stopped new container instance may be reactivated for reuse after the target performance indicator of the target downstream container instance exceeds the preset threshold next time, or the resources of the new container instance may be recycled.

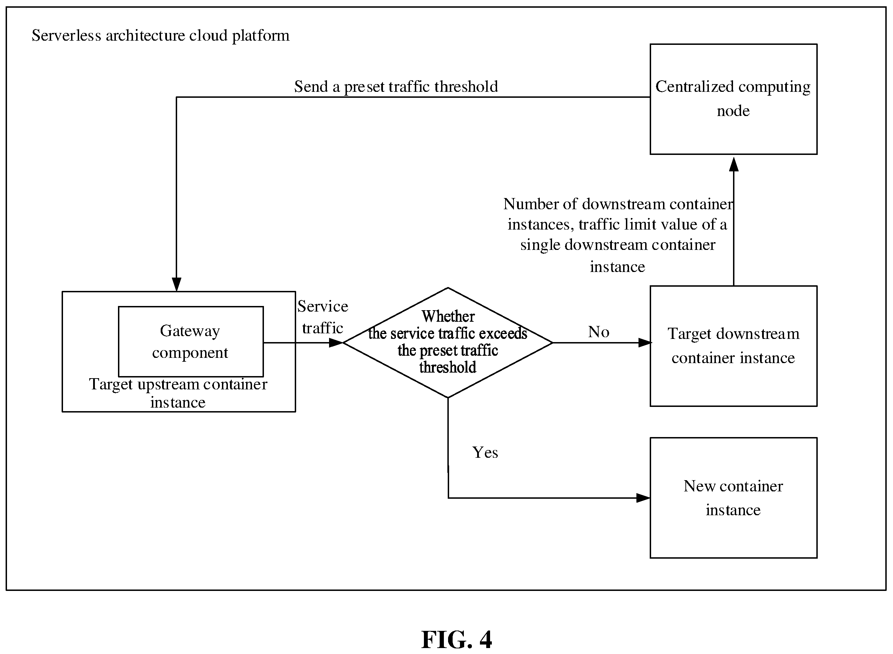

In another optional embodiment, on the basis of any of the above embodiments, as shown in FIG. 4, a gateway component may be preset in any target upstream container instance of the one or more upstream container instances, and the gateway component can detect the service traffic (i.e., the first indicator) sent by the target upstream container instance to the target downstream container instance in real time. If the gateway component detects that the service traffic sent by the target upstream container instance to the target downstream container instance exceeds a preset traffic threshold (i.e., a preset threshold corresponding to the first indicator), the gateway component may forward the service traffic that exceeds the preset traffic threshold and is to be sent by the target upstream container instance to the target downstream container instance to the new container instance corresponding to the target downstream container instance. By controlling the forwarding of the service traffic through the gateway component of the upstream container instance, the problem of insufficient forwarding performance of the target downstream container instance can be solved. In addition, the overhead of one link transmission can be reduced in the upstream forwarding.

Optionally, the preset traffic threshold in this embodiment may be set to a fixed value, or may be dynamically changed. Specifically, the preset traffic threshold may be dynamically changed according to the number of downstream container instances, the traffic limit value of a single downstream container instance, and the number of upstream container instances.

The number of downstream container instances, the traffic limit value of the single downstream container instance, and the number of upstream container instances may be obtained, and then the product of the number of downstream container instances and the upper limit value of the traffic received by the single downstream container instance is obtained as the upper limit value of the total traffic received by the downstream container instances. Then, the ratio of the upper limit value of the total traffic received by the downstream container instances to the number of upstream container instances is obtained as the upper limit value of the traffic sent by a single upstream container instance, and the upper limit value of the traffic sent by the single upstream container instance is determined as the preset traffic threshold, that is, the preset traffic threshold = the number of downstream container instances * the upper limit value of the traffic received by the single downstream container instance/the number of upstream container instances. The process of calculating the preset traffic threshold may be performed by the target upstream container instance itself, or may be calculated by a centralized computing node and sent to each target upstream container instance, so as to be used as a basis for determining the forwarding of the service traffic at the level of the target upstream container instance.

Optionally, in any of the above embodiments, when forwarding the service traffic to the new container instance corresponding to the target downstream container instance, whether there is the corresponding new container instance for the target downstream container instance may be searched, and if not, the corresponding new container instance is created for the target downstream container instance, and warmed up or started.

In addition, after a part of the service traffic is forwarded to the new container instance corresponding to the target downstream container instance, if the target indicator does not exceed the corresponding preset threshold any more, the new container instance may be stopped, and all the service traffic is sent to the target downstream container instance for processing. Optionally, the stopped new container instance may be reactivated for reuse after the target indicator exceeds the corresponding preset threshold next time, or the resources of the new container instance may be recycled.

Certainly, the above container instances may be combined with each other, that is, when the gateway component of any target upstream container instance detects that the service traffic sent by the target upstream container instance to the target downstream container instance exceeds the preset traffic threshold, the gateway component may forward the service traffic that exceeds the preset traffic threshold and is to be sent by the target upstream container instance to the target downstream container instance to the new container instance corresponding to the target downstream container instance; and when the forwarding component of the target downstream container instance detects that at least one of the target performance indicators of the target downstream container instance exceeds the corresponding preset threshold, the forwarding component may also forward a part of the service traffic received by the target downstream container instance from the one or more upstream container instances to the new container instance corresponding to the target downstream container instance.

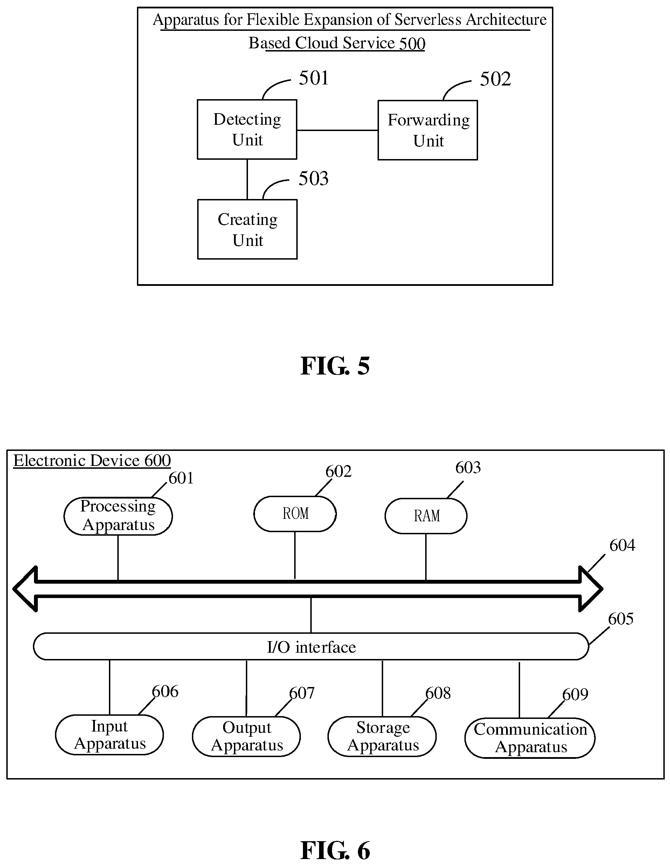

Corresponding to the method for flexible expansion of a serverless architecture-based cloud service in the above embodiments, FIG. 5 is a block diagram of an apparatus for flexible expansion of a serverless architecture-based cloud service provided by an embodiment of the present disclosure. For the ease of illustration, only parts related to the embodiments of the present disclosure are shown. Referring to FIG. 5, the apparatus 500 for flexible expansion of a serverless architecture-based cloud service includes a detecting unit 501 and a forwarding unit 502.

The detecting unit 501 is configured to detect, in a process of a container instance processing flow in a cloud platform based on a serverless architecture, a first indicator in a process of sending service traffic from an upstream container instance to a target downstream container instance and/or a second indicator in a process of processing the service traffic by the target downstream container instance, and determine whether a target indicator exceeds a corresponding preset threshold, wherein the target indicator includes the first indicator and/or the second indicator.

The forwarding unit 502 is configured to, if it is determined that the target indicator exceeds the corresponding preset threshold, forward a part of the service traffic to a new container instance corresponding to the target downstream container instance, wherein the new container instance is a container instance that is newly created in advance for the target downstream container instance and has been warmed up.

In one or more embodiments of the present disclosure, when detecting the second indicator in the process of processing the service traffic by the target downstream container instance and determining whether the target indicator exceeds the corresponding preset threshold, the detecting unit 501 is configured to:
detect, through a forwarding component preset in the target downstream container instance, the second indicator in the process of processing the service traffic by the target downstream container instance, and determine whether the second indicator exceeds the corresponding preset threshold, wherein the second indicator is a target performance indicator of the target downstream container instance; and
when forwarding the part of the service traffic to the new container instance corresponding to the target downstream container instance, the forwarding unit 502 is configured to:
forward, through the forwarding component, the part of the service traffic received by the target downstream container instance from the one or more upstream container instances to the new container instance corresponding to the target downstream container instance.

In one or more embodiments of the present disclosure,
the target performance indicator includes at least one of: CPU utilization, memory utilization, or request delay time.

In one or more embodiments of the present disclosure, when detecting the first indicator in the process of sending the service traffic from the upstream container instance to the target downstream container instance and determining whether the target indicator exceeds the corresponding preset threshold, the detecting unit 501 is configured to:
for any target upstream container instance, detect, through a gateway component preset in the target upstream container instance, the first indicator in the process of sending the service traffic from the upstream container instance to the target downstream container instance, and determine whether the first indicator exceeds the corresponding preset threshold, wherein the first indicator is the service traffic sent by the target upstream container instance to the target downstream container instance; and
when forwarding the part of the service traffic to the new container instance corresponding to the target downstream container instance, the forwarding unit 502 is configured to:
through the gateway component, forward, to the new container instance corresponding to the target downstream container instance, the service traffic that exceeds the preset traffic threshold and is to be sent by the target upstream container instance to the target downstream container instance.

In one or more embodiments of the present disclosure, the detecting unit 501 is further configured to:
obtain the number of downstream container instances, the traffic limit value of the single downstream container instance, and the number of upstream container instances; and
obtain the product of the number of downstream container instances and the upper limit value of the traffic received by the single downstream container instance as the upper limit value of the total traffic received by the downstream container instances, and obtain the ratio of the upper limit value of the total traffic received by the downstream container instances to the number of upstream container instances as the upper limit value of the traffic sent by the single upstream container instance, and determine the upper limit value of the traffic sent by the single upstream container instance as the preset threshold corresponding to the first indicator.

In one or more embodiments of the present disclosure, the apparatus further includes a creation unit 503, configured to, before the part of the service traffic is forwarded to the new container instance corresponding to the target downstream container instance, create the corresponding new container instance for the target downstream container instance, and warm up the new container instance; and
when forwarding the part of the service traffic to the new container instance corresponding to the target downstream container instance, the forwarding unit 502 is configured to:
activate the new container instance, and forward the part of the service traffic to the new container instance corresponding to the target downstream container instance.

In one or more embodiments of the present disclosure, when creating the corresponding new container instance for the target downstream container instance, the creation unit 503 is configured to:
search whether there is the corresponding new container instance for the target downstream container instance, and if not, create the corresponding new container instance for the target downstream container instance.

In one or more embodiments of the present disclosure, when creating the corresponding new container instance for the target downstream container instance, the creation unit 503 is configured to:
create the corresponding new container instance for the target downstream container instance at any moment before the target indicator exceeds the corresponding preset threshold.

In one or more embodiments of the present disclosure, when creating the corresponding new container instance for the target downstream container instance at any moment before the target indicator exceeds the corresponding preset threshold, the creation unit 503 is configured to:
create the corresponding new container instance for the target downstream container instance when the target indicator reaches a preset proportion of the corresponding preset threshold.

In one or more embodiments of the present disclosure, after forwarding the part of the service traffic to the new container instance corresponding to the target downstream container instance, the forwarding unit 502 is further configured to:
if the target indicator no longer exceeds the corresponding preset threshold, stop the new container instance, and send the service traffic to the target downstream container instance.

The apparatus provided by this embodiment can be used to execute the technical solutions of the above method embodiments, and the implementation principles and technical effects thereof are similar, which will not be repeated here in this embodiment.

Referring to FIG. 6, it shows a schematic diagram of a structure of an electronic device 600 suitable for implementing the embodiments of the present disclosure. The electronic device 600 may be a terminal device or a server. The terminal device may include, but is not limited to, a mobile terminal such as a mobile phone, a laptop, a digital broadcast receiver, a personal digital assistant (abbreviated as PDA), a tablet computer, a portable media player (abbreviated as PMP), a vehicle-mounted terminal (such as a vehicle-mounted navigation terminal), etc., and a fixed terminal such as a digital TV, a desktop computer, etc. The electronic device shown in FIG. 6 is only an example, and should not bring any limitation to the function and scope of use of the embodiments of the present disclosure.

As shown in FIG. 6, the electronic device 600 may include a processing apparatus (such as a central processor, a graphics processor, etc.) 601, which can perform various appropriate actions and processing according to a program stored in a read-only memory (abbreviated as ROM) 602 or a program loaded from a storage apparatus 608 into a random access memory (abbreviated as RAM) 603. In the RAM 603, various programs and data required for operations of the electronic device 600 are also stored. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, a gyroscope, etc.; an output apparatus 607 including, for example, a liquid crystal display (abbreviated as LCD), a speaker, a vibrator, etc.; a storage apparatus 608 including, for example, a magnetic tape, a hard disk, etc.; and a communication apparatus 609. The communication apparatus 609 may allow the electronic device 600 to perform wireless or wired communication with other devices to exchange data. Although FIG. 6 shows the electronic device 600 having various apparatuses, it should be understood that not all of the illustrated apparatuses are necessarily implemented or included. Alternatively, more or fewer apparatuses may be implemented or included.

Particularly, according to the embodiments of the present disclosure, the process described above with reference to the flowchart can be implemented as a computer software program. For example, an embodiment of the present disclosure includes a computer program product, which includes a computer program carried on a computer-readable medium, and the computer program includes program codes for executing the method shown in the flowchart. In such an embodiment, the computer program may be downloaded and installed from a network through the communication apparatus 609, or may be installed from the storage apparatus 608, or may be installed from the ROM 602. When the computer program is executed by the processing apparatus 601, the above functions defined in the methods of the embodiments of the present disclosure are executed.

It should be noted that the above computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program, and the program may be used by or in combination with an instruction execution system, apparatus or device. In the present disclosure, the computer-readable signal medium may include a data signal propagated in baseband or as a part of a carrier wave, and computer-readable program codes are carried in the data signal. The data signal propagated in this manner may be in multiple forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus or device. The program codes contained in the computer-readable medium may be transmitted by any suitable medium, including but not limited to an electric wire, an optical cable, radio frequency (RF), etc., or any suitable combination thereof.

The above computer-readable medium may be included in the above electronic device, or may exist alone without being assembled into the electronic device.

The above computer-readable medium carries one or more programs, and when the one or more programs are executed by the electronic device, the electronic device is caused to execute the method shown in the above embodiments.

The computer program codes used to perform the operations of the present disclosure may be written in one or more programming languages or a combination thereof. The above programming languages include object-oriented programming languages, such as Java, Smalltalk, C++, and also include conventional procedural programming languages, such as the "C" programming language or similar programming languages. The program codes may be executed entirely on a user's computer, partly on the user's computer, as a stand-alone software package, partly on the user's computer and partly on a remote computer, or entirely on the remote computer or server. In the scenario related to the remote computer, the remote computer may be connected to the user's computer through any kind of network, including a local area network (abbreviated as LAN) or a wide area network (abbreviated as WAN), or the connection may be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a special-purpose hardware-based system that performs the specified functions or operations, or may also be implemented by a combination of special-purpose hardware and computer instructions.

The units involved in the embodiments of the present disclosure may be implemented in software or hardware. The name of a unit does not constitute a limitation of the unit itself under certain circumstances. For example, a first acquisition unit may also be described as "a unit for acquiring at least two internet protocol addresses".

The functions described herein may be executed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), and the like.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

In a first aspect, one or more embodiments of the present disclosure provide a method for flexible expansion of a serverless architecture-based cloud service, including:
detecting, in a process of a container instance processing flow in a serverless architecture-based cloud platform, a first indicator in a process of sending service traffic from an upstream container instance to a target downstream container instance, and/or a second indicator in a process of processing the service traffic by the target downstream container instance, and determining whether a target indicator exceeds a corresponding preset threshold, wherein the target indicator includes the first indicator and/or the second indicator; and
if it is determined that the target indicator exceeds the corresponding preset threshold, forwarding a part of the service traffic to a new container instance corresponding to the target downstream container instance, wherein the new container instance is a container instance that is newly created in advance for the target downstream container instance and has been warmed up.

According to one or more embodiments of the present disclosure, the detecting the second indicator in the process of processing the service traffic by the target downstream container instance and determining whether the target indicator exceeds the corresponding preset threshold includes:
detecting, through a forwarding component preset in the target downstream container instance, the second indicator in the process of processing the service traffic by the target downstream container instance, and determining whether the second indicator exceeds the corresponding preset threshold, wherein the second indicator is a target performance indicator of the target downstream container instance; and
the forwarding the part of the service traffic to the new container instance corresponding to the target downstream container instance includes:
forwarding, through the forwarding component, a part of the service traffic received by the target downstream container instance from the one or more upstream container instances to the new container instance corresponding to the target downstream container instance.

According to one or more embodiments of the present disclosure, the target performance indicator includes at least one of: CPU utilization, memory utilization, or request delay time.

According to one or more embodiments of the present disclosure, the detecting the first indicator in the process of sending the service traffic from the upstream container instance to the target downstream container instance and determining whether the target indicator exceeds the corresponding preset threshold includes:
for any target upstream container instance, detecting, through a gateway component preset in the target upstream container instance, the first indicator in the process of sending the service traffic from the upstream container instance to the target downstream container instance, and determining whether the first indicator exceeds the corresponding preset threshold, wherein the first indicator is the service traffic sent by the target upstream container instance to the target downstream container instance; and
the forwarding the part of the service traffic to the new container instance corresponding to the target downstream container instance includes:
through the gateway component, forwarding, to the new container instance corresponding to the target downstream container instance, the service traffic that exceeds the preset traffic threshold and is to be sent by the target upstream container instance to the target downstream container instance.

According to one or more embodiments of the present disclosure, the method further includes:
obtaining the number of downstream container instances, the traffic limit value of the single downstream container instance, and the number of upstream container instances; and
obtaining the product of the number of downstream container instances and the upper limit value of the traffic received by the single downstream container instance as the upper limit value of the total traffic received by the downstream container instances, and obtaining the ratio of the upper limit value of the total traffic received by the downstream container instances to the number of upstream container instances as the upper limit value of the traffic sent by the single upstream container instance, and determining the upper limit value of the traffic sent by the single upstream container instance as the preset threshold corresponding to the first indicator.

According to one or more embodiments of the present disclosure, before the forwarding the part of the service traffic to the new container instance corresponding to the target downstream container instance, the method further includes:
creating the corresponding new container instance for the target downstream container instance, and warming up the new container instance; and
the forwarding the part of the service traffic to the new container instance corresponding to the target downstream container instance includes:
activating the new container instance, and forwarding the part of the service traffic to the new container instance corresponding to the target downstream container instance.

According to one or more embodiments of the present disclosure, the creating the corresponding new container instance for the target downstream container instance includes:
searching whether there is the corresponding new container instance for the target downstream container instance, and if not, creating the corresponding new container instance for the target downstream container instance.

According to one or more embodiments of the present disclosure, the creating the corresponding new container instance for the target downstream container instance includes:
creating the corresponding new container instance for the target downstream container instance at any moment before the target indicator exceeds the corresponding preset threshold.

According to one or more embodiments of the present disclosure, the creating the corresponding new container instance for the target downstream container instance at any moment before the target indicator exceeds the corresponding preset threshold includes:
creating the corresponding new container instance for the target downstream container instance when the target indicator reaches a preset proportion of the corresponding preset threshold.

According to one or more embodiments of the present disclosure, after the forwarding the part of the service traffic to the new container instance corresponding to the target downstream container instance, the method further includes:
if the target indicator no longer exceeds the corresponding preset threshold, stopping the new container instance, and sending the service traffic to the target downstream container instance.

In a second aspect, one or more embodiments of the present disclosure provide an apparatus for flexible expansion of a serverless architecture-based cloud service, including:
a detecting unit, configured to detect, in a process of a container instance processing flow in a serverless architecture-based cloud platform, a first indicator in a process of sending service traffic from an upstream container instance to a target downstream container instance, and/or a second indicator in a process of processing the service traffic by the target downstream container instance, and determine whether a target indicator exceeds a corresponding preset threshold, wherein the target indicator includes the first indicator and/or the second indicator; and
a forwarding unit, configured to, if it is determined that the target indicator exceeds the corresponding preset threshold, forward a part of the service traffic to a new container instance corresponding to the target downstream container instance, wherein the new container instance is a container instance that is newly created in advance for the target downstream container instance and has been warmed up.

According to one or more embodiments of the present disclosure, when detecting the second indicator in the process of processing the service traffic by the target downstream container instance and determining whether the target indicator exceeds the corresponding preset threshold, the detecting unit is configured to:
detect, through a forwarding component preset in the target downstream container instance, the second indicator in the process of processing the service traffic by the target downstream container instance, and determine whether the second indicator exceeds the corresponding preset threshold, wherein the second indicator is a target performance indicator of the target downstream container instance; and
when forwarding the part of the service traffic to the new container instance corresponding to the target downstream container instance, the forwarding unit is configured to:
forward, through the forwarding component, the part of the service traffic received by the target downstream container instance from the one or more upstream container instances to the new container instance corresponding to the target downstream container instance.

According to one or more embodiments of the present disclosure, the
the target performance indicator includes at least one of: CPU utilization, memory utilization, or request delay time.

According to one or more embodiments of the present disclosure, when detecting the first indicator in the process of sending the service traffic from the upstream container instance to the target downstream container instance and determining whether the target indicator exceeds the corresponding preset threshold, the detecting unit is configured to:
for any target upstream container instance, detect, through a gateway component preset in the target upstream container instance, the first indicator in the process of sending the service traffic from the upstream container instance to the target downstream container instance, and determine whether the first indicator exceeds the corresponding preset threshold, wherein the first indicator is the service traffic sent by the target upstream container instance to the target downstream container instance; and
when forwarding the part of the service traffic to the new container instance corresponding to the target downstream container instance, the forwarding unit is configured to:
through the gateway component, forward, to the new container instance corresponding to the target downstream container instance, the service traffic that exceeds the preset traffic threshold and is to be sent by the target upstream container instance to the target downstream container instance.

According to one or more embodiments of the present disclosure, the detecting unit is further configured to:
obtain the number of downstream container instances, the traffic limit value of the single downstream container instance, and the number of upstream container instances; and
obtain the product of the number of downstream container instances and the upper limit value of the traffic received by the single downstream container instance as the upper limit value of the total traffic received by the downstream container instances, and obtain the ratio of the upper limit value of the total traffic received by the downstream container instances to the number of upstream container instances as the upper limit value of the traffic sent by the single upstream container instance, and determine the upper limit value of the traffic sent by the single upstream container instance as the preset threshold corresponding to the first indicator.

According to one or more embodiments of the present disclosure, the apparatus further includes a creation unit, configured to, before the part of the service traffic is forwarded to the new container instance corresponding to the target downstream container instance, create the corresponding new container instance for the target downstream container instance, and warm up the new container instance; and
when forwarding the part of the service traffic to the new container instance corresponding to the target downstream container instance, the forwarding unit is configured to:
activate the new container instance, and forward the part of the service traffic to the new container instance corresponding to the target downstream container instance.

According to one or more embodiments of the present disclosure, when creating the corresponding new container instance for the target downstream container instance, the creation unit is configured to:
search whether there is the corresponding new container instance for the target downstream container instance, and if not, create the corresponding new container instance for the target downstream container instance.

According to one or more embodiments of the present disclosure, when creating the corresponding new container instance for the target downstream container instance, the creation unit is configured to:
create the corresponding new container instance for the target downstream container instance at any moment before the target indicator exceeds the corresponding preset threshold.

According to one or more embodiments of the present disclosure, when creating the corresponding new container instance for the target downstream container instance at any moment before the target indicator exceeds the corresponding preset threshold, the creation unit is configured to:
create the corresponding new container instance for the target downstream container instance when the target indicator reaches a preset proportion of the corresponding preset threshold.

According to one or more embodiments of the present disclosure, after forwarding the part of the service traffic to the new container instance corresponding to the target downstream container instance, the forwarding unit is further configured to:
if the target indicator no longer exceeds the corresponding preset threshold, stop the new container instance, and send the service traffic to the target downstream container instance.

In a third aspect, one or more embodiments of the present disclosure provide an electronic device, including: at least one processor and a memory.

The memory stores computer-executable instructions.

The at least one processor executes the computer-executable instructions stored in the memory to enable the at least one processor to execute the method for flexible expansion of a serverless architecture-based cloud service according to the above first aspect and various possible designs of the first aspect.

In a fourth aspect, one or more embodiments of the present disclosure provide a computer-readable storage medium, wherein the computer-readable storage medium stores computer-executable instructions, and when the processor executes the computer-executable instructions, the method for flexible expansion of a serverless architecture-based cloud service according to the above first aspect and various possible designs of the first aspect is implemented.

In a fifth aspect, one or more embodiments of the present disclosure provide a computer program product, including computer-executable instructions, and when the processor executes the computer-executable instructions, the method for flexible expansion of a serverless architecture-based cloud service according to the above first aspect and various possible designs of the first aspect is implemented.

The above description is merely preferred embodiments of the present disclosure and an illustration of the applied technical principles. Those skilled in the art should understand that the scope of disclosure involved in the present disclosure is not limited to the technical solutions formed by the specific combination of the above-mentioned technical features, but also covers other technical solutions formed by any combination of the above-mentioned technical features or their equivalent features without departing from the above-mentioned disclosed concept. For example, the technical solutions formed by replacing the above features with the technical features with similar functions disclosed in the present disclosure (but not limited to).

In addition, although operations are depicted in a particular order, this should not be understood as requiring that the operations are performed in the specific order shown or in a sequential order. Under certain circumstances, multitasking and parallel processing may be advantageous. Similarly, although the above discussion contains several specific implementation details, these should not be interpreted as limiting the scope of the present disclosure. Certain features that are described in the context of separate embodiments can also be implemented in combination in a single embodiment. Conversely, various features described in the context of a single embodiment can also be implemented in multiple embodiments individually or in any suitable subcombination.

Although the subject matter has been described in language specific to structural features and/or logical actions of methods, it should be understood that the subject matter defined in the appended claims is not necessarily limited to the specific features or actions described above. Rather, the specific features and actions described above are merely example forms of implementing the claims.

## Claims

1. A method for flexible expansion of a serverless architecture-based cloud service, comprising:
detecting (S201), in a process of a container instance processing flow in a serverless architecture-based cloud platform, a first indicator in a process of sending service traffic from an upstream container instance to a target downstream container instance, and/or a second indicator in a process of processing the service traffic by the target downstream container instance, and determining whether a target indicator exceeds a corresponding preset threshold, the target indicator comprising the first indicator and/or the second indicator; and
in response to determining that the target indicator exceeds the corresponding preset threshold, forwarding (S202) a part of the service traffic to a new container instance corresponding to the target downstream container instance, the new container instance being a container instance that is newly created in advance for the target downstream container instance and has been warmed up.

2. The method according to claim 1, wherein detecting the second indicator in the process of processing the service traffic by the target downstream container instance and determining whether the target indicator exceeds the corresponding preset threshold comprises:
detecting, through a forwarding component preset in the target downstream container instance, the second indicator in the process of processing the service traffic by the target downstream container instance, and determining whether the second indicator exceeds the corresponding preset threshold, wherein the second indicator is a target performance indicator of the target downstream container instance; and
forwarding the part of the service traffic to the new container instance corresponding to the target downstream container instance comprises:
forwarding, through the forwarding component, a part of service traffic received by the target downstream container instance from one or more upstream container instances to the new container instance corresponding to the target downstream container instance.

3. The method according to claim 2, wherein
the target performance indicator comprises at least one of: a CPU utilization, a memory utilization, or a request delay time.

4. The method according to claim 1, wherein detecting the first indicator in the process of sending the service traffic from the upstream container instance to the target downstream container instance and determining whether the target indicator exceeds the corresponding preset threshold comprises:
for any target upstream container instance, detecting, through a gateway component preset in the target upstream container instance, the first indicator in the process of sending the service traffic from the upstream container instance to the target downstream container instance, and determining whether the first indicator exceeds the corresponding preset threshold, wherein the first indicator is the service traffic sent by the target upstream container instance to the target downstream container instance; and
forwarding the part of the service traffic to the new container instance corresponding to the target downstream container instance comprises:
forwarding, through the gateway component and to the new container instance corresponding to the target downstream container instance, the service traffic that exceeds the preset threshold and is to be sent by the target upstream container instance to the target downstream container instance.

5. The method according to claim 4, wherein the method further comprises:
obtaining a number of downstream container instances, a traffic limit value of a single downstream container instance, and a number of upstream container instances; and
obtaining a product of the number of downstream container instances and a received traffic upper limit value of the single downstream container instance as a total received traffic upper limit value of the downstream container instances, and obtaining a ratio of the total received traffic upper limit value of the downstream container instances to the number of upstream container instances as a sent traffic upper limit value of a single upstream container instance, and determining the sent traffic upper limit value of the single upstream container instance as the preset threshold corresponding to the first indicator.

6. The method according to claim 1, wherein before forwarding the part of the service traffic to the new container instance corresponding to the target downstream container instance, the method further comprises:
creating a corresponding new container instance for the target downstream container instance, and warming up the new container instance; and
forwarding the part of the service traffic to the new container instance corresponding to the target downstream container instance comprises:
activating the new container instance, and forwarding the part of the service traffic to the new container instance corresponding to the target downstream container instance.

7. The method according to claim 6, wherein creating the corresponding new container instance for the target downstream container instance comprises:
creating the corresponding new container instance for the target downstream container instance at any moment before the target indicator exceeds the corresponding preset threshold.

8. The method according to claim 7, wherein creating the corresponding new container instance for the target downstream container instance at any moment before the target indicator exceeds the corresponding preset threshold comprises:
creating the corresponding new container instance for the target downstream container instance when the target indicator reaches a preset proportion of the corresponding preset threshold.

9. The method according to claim 1, wherein after forwarding the part of the service traffic to the new container instance corresponding to the target downstream container instance, the method further comprises:
in response to the target indicator no longer exceeding the corresponding preset threshold, stopping the new container instance, and sending the service traffic to the target downstream container instance.

10. An electronic device, comprising: at least one processor and a memory;
wherein the memory stores computer-executable instructions; and
the at least one processor executes the computer-executable instructions stored in the memory to cause the at least one processor to perform the method according to any of claims 1 to 9.

11. A computer-readable storage medium, wherein the computer-readable storage medium stores computer-executable instructions, and the processor when executing the computer-executable instructions, performs the method according to any of claims 1 to 9.

12. A computer program product, comprising computer-executable instructions, wherein the processor when executing the computer-executable instructions, performs the method according to any of claims 1 to 9.
